(19) Europäisches Patentamt
European Patent Office
Office européen des brevets

(11) Veröffentlichungsnummer: **0 534 342 A1**

# (12) EUROPÄISCHE PATENTANMELDUNG

(21) Anmeldenummer: **92116109.7**

(22) Anmeldetag: **21.09.92**

(51) Int. Cl.5: **C09B 62/51**

(30) Priorität: **27.09.91 DE 4132223**

(43) Veröffentlichungstag der Anmeldung:
**31.03.93 Patentblatt 93/13**

(84) Benannte Vertragsstaaten:
**BE CH DE ES FR GB IT LI NL**

(71) Anmelder: **HOECHST AKTIENGESELLSCHAFT**
**Postfach 80 03 20**
**W-6230 Frankfurt am Main 80(DE)**

(72) Erfinder: **Schläfer, Ludwig, Dr.**
**Königsbergerstrasse 40**
**W-6233 Kelkheim/Ts(DE)**
Erfinder: **Russ, Werner Hubert, Dr.**
**Wingertstrasse 8a**
**W-6093 Flörsheim/M(DE)**

## (54) Wasserlösliche Monoazoverbindungen, Verfahren zu deren Herstellung und ihre Verwendung als Farbstoffe.

(57) Es werden Monoazoverbindungen beschrieben, die faserreaktive Eigenschaften besitzen und hydroxy- und/oder carbonamidgruppenhaltige Materialien, insbesondere Fasermaterialien, wie beispielsweise Cellulosefasermaterialien und Wolle, in farbstarken echten Tönen färben und insbesondere auch für den Reserve- und Ätzdruck eingesetzt werden können. Sie entsprechen der allgemeinen Formel (1)

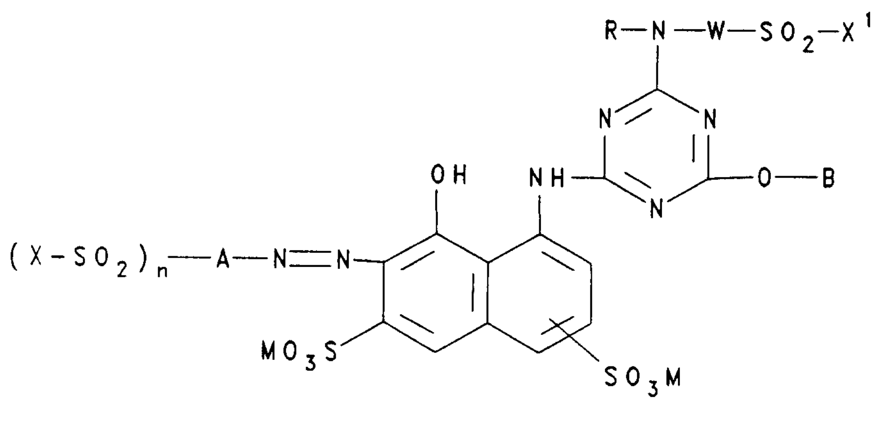

(1)

in welcher bedeuten:
A ist gegebenenfalls substituiertes Phenylen oder gegebenenfalls sulfosubstituiertes Naphthylen, die Gruppen X-$SO_2$- und -$SO_2X^1$ stellen faserreaktive Gruppen der Vinylsulfonreihe dar, n ist die Zahl 1 oder 2, M ist Wasserstoff oder ein Alkalimetall, R ist Wasserstoff oder niederes Alkyl, W ist Phenylen, Sulfonaphthylen, Naphthylen oder niederes Alkylen, B ist niederes Alkyl und die eine Gruppe -$SO_3M$ ist in 3- oder 4-Stellung an den 8-Naphthol-Rest gebunden.

EP 0 534 342 A1

Die Erfindung liegt auf dem technischen Gebiet der faserreaktiven Azofarbstoffe.

Einzelne Azofarbstoffe mit einer Aminonaphthol-suffonsäure-Kupplungskomponente, die eine faserreaktive Gruppe der Vinylsulfonreihe besitzen und darüber hinaus einen alkoxysubstituierten s-Triazin-Rest enthalten, sind aus den veröffentlichten, geprüften japanischen Patentanmeldungen mit den Veröffentlichungs-Nrs. Sho-45-10789 und Sho-55-39672 sowie aus den Europäischen Patentanmeldungs-Veröffentlichungen Nrs. 0 174 275A und 0 384 372A bekannt.

Mit der vorliegenden Erfindung wurden nunmehr neue, wertvolle faserreaktive Monoazoverbindungen mit guten bis sehr guten Naßechtheitseigenschaften der mit ihnen erhältlichen Färbungen gefunden, die sich sehr gut für den Ätz- und Reservedruck eignen und somit in breiterem Anwendungsumfang zum Färben von Fasermaterialien einsetzen lassen. Beim Ätzdruck wird auf eine gefärbte Stoffbahn (Fond) in einem gewünschten Muster ein Ätzmittel aufgedruckt; das Ätzmittel zerstört den Farbstoff, sofern dieser ätzbar ist, so daß nach Fertigstellung des Ätzverfahrens ein weißes Muster auf der Färbung erscheint (Weißätze). Enthält die aufgedruckte Ätze zusätzlich einen ätzestabilen Farbstoff, so erhält man nach Fertigstellung des Ätzvorgangs und üblicher Behandlung zur Fixierung dieses beigegebenen Farbstoffes auf dem Fond ein Druckmuster in einem anderen Farbton (Buntätze). Bei dem Reservedruck wird zunächst das Gewebe mit einem geeigneten Reservierungsmittel in einem gewünschten Muster bedruckt. Das so vorbedruckte Gewebe wird anschließend mit einem Farbstoff, der sich mit dem Reservierungsmittel zu verbinden vermag und somit nicht mehr in der Lage ist, auf dem Gewebe zu fixieren, überfärbt (überklotzt oder überdruckt) mit der Folge, daß an den reservierten Stellen keine Farbstoffixierung eintritt und somit die erhaltene Färbung ein weißes Muster gemäß dem Muster des Reservierungsmittels besitzt.

Die neuen, erfindungsgemäßen Monoazoverbindungen besitzen die allgemeinen Formel (1)

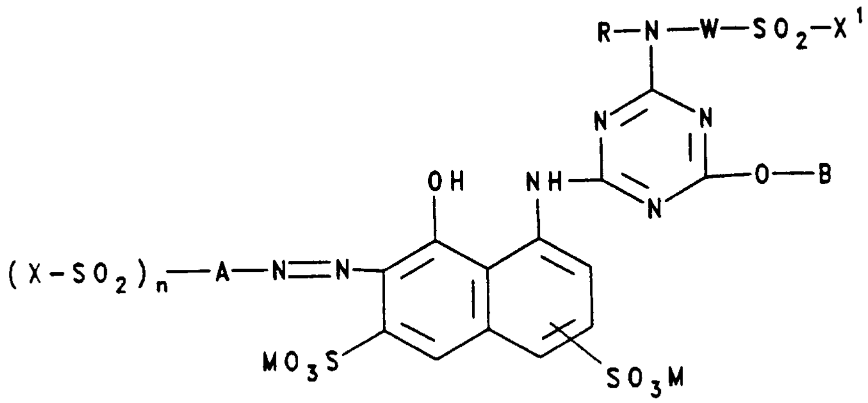

(1)

in welcher bedeuten:

- A ist Phenylen, das durch 1 oder 2 Substituenten substituiert sein kann, wie beispielsweise Substituenten aus der Gruppe Halogen, wie Brom und insbesondere Chlor, Alkyl von 1 bis 4 C-Atomen, wie Ethyl und insbesondere Methyl, Alkoxy von 1 bis 4 C-Atomen, wie Ethoxy und insbesondere Methoxy, Sulfo und Carboxy, wobei der Phenylenrest bevorzugt der meta- oder para-Phenylenrest ist, oder ist ein Naphthylen, an das die Azogruppe bevorzugt in 2-Stellung gebunden ist, das durch ein Sulfo substituiert sein kann;
- X ist Vinyl oder ist Ethyl, das durch einen Substituenten substituiert ist, der durch Alkali unter Bildung der Vinylgruppe eliminierbar ist, bevorzugt hiervon β-Sulfatoethyl;
- n ist die Zahl 1 oder 2, bevorzugt 1;
- M ist Wasserstoff oder ein Alkalimetall, wie Natrium, Kalium oder Lithium;
- R ist Wasserstoff oder Alkyl von 1 bis 4 C-Atomen, wie Ethyl und insbesondere Methyl, insbesondere bevorzugt Wasserstoff;
- W ist Phenylen oder Alkylen von 2 bis 4 C-Atomen, bevorzugt hiervon 1,3-Phenylen, 1,4-Phenylen, 1,2-Ethylen und 1,3-Propylen;
- $X^1$ ist Vinyl oder ist Ethyl, das in β-Stellung durch einen Substituenten substituiert ist, der durch Alkali unter Bildung der Vinylgruppe eliminierbar ist, wie hiervon bevorzugt β-Chlorethyl oder β-Sulfatoethyl, und ist bevorzugt Vinyl oder β-Sulfatoethyl;
- B ist Alkyl von 1 bis 4 C-Atomen, wie Ethyl und insbesondere Methyl;

die eine Sulfogruppe $-SO_3M$ ist in 3- oder 4-Stellung an den 8-Naphthol-Rest gebunden.

Weiterhin bevorzugt sind hiervon Verbindungen, in welchen A einen Rest der allgemeinen Formel (2a) oder (2b)

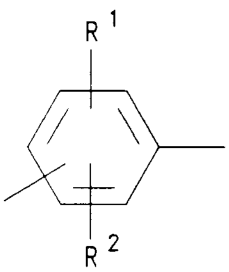

(2a)

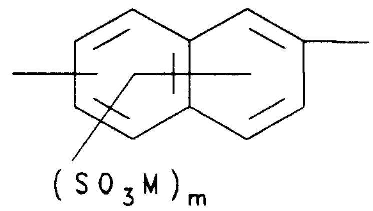

(2b)

ist, worin bedeuten:

- $R^1$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy, Carboxy, Chlor oder Sulfo, bevorzugt Wasserstoff oder Methoxy;
- $R^2$ ist Wasserstoff, Alkyl von 1 bis 4 C-Atomen, wie Ethyl und insbesondere Methyl, Alkoxy von 1 bis 4 C-Atomen, wie Ethoxy und insbesondere Methoxy oder Chlor, bevorzugt Wasserstoff oder Methoxy;
- m ist die Zahl Null oder 1, wobei im Falle von m gleich 1 die Gruppe $SO_3M$ bevorzugt in 1-, 6- oder 8-Stellung gebunden ist (im Falle von m gleich Null stellt diese Gruppierung ein Wasserstoffatom dar);

die Gruppe $X-SO_2-$ steht im Formelrest (2b) bevorzugt in 6- oder 8-Stellung des in 2-Stellung mit der Azogruppe verbundenen Naphthylrestes. β-Ständige, alkalisch eliminierbare Substituenten in der Ethylgruppe von X und $X^1$ sind beispielsweise Alkanoyloxy von 2 bis 5 C-Atomen, wie Acetyloxy, Benzoyloxy, Sulfobenzoyloxy, Toluolsulfonyloxy, Halogen, wie Brom und insbesondere Chlor, Dimethylamino, Diethylamino, Phosphato, Thiosulfato und Sulfato.

Die Gruppen "Sulfo", "Carboxy", "Phosphato", "Thiosulfato" und "Sulfato" schließen sowohl deren Säureform als auch deren Salzform ein. Demgemäß bedeuten Sulfogruppen Gruppen entsprechend der allgemeinen Formel $-SO_3M$, Carboxygruppen Gruppen entsprechend der allgemeinen Formel -COOM, Phosphatogruppen Gruppen entsprechend der allgemeinen Formel $-OPO_3M_2$, Thiosulfatogruppen Gruppen entsprechend der allgemeinen Formel $-S-SO_3M$ und Sulfatogruppen Gruppen entsprechend der allgemeinen Formel $-OSO_3M$, jeweils mit M der obengenannten Bedeutung.

Reste der allgemeinen Formel $(X-SO_2)_n-A-$ in den Verbindungen der allgemeinen Formel (1) sind beispielsweise 4-(β-Sulfatoethylsulfonyl)-phenyl, 4-Vinylsulfonyl-phenyl, 3-(β-Sulfatoethylsulfonyl)-phenyl, 2,4-Bis-(β-sulfatoethylsulfonyl)-phenyl, 2,5-Bis-(β-sulfatoethylsulfonyl)-phenyl, 3,4-Bis-(β-sulfatoethylsulfonyl)-phenyl, 3,5-Bis-(β-sulfatoethylsulfonyl)-phenyl, 2-Methoxy-5-(β-sulfatoethylsulfonyl)-phenyl, 4-Methoxy-3-(β-sulfatoethylsulfonyl)-phenyl, 2-Methoxy-4-(β-sulfatoethylsulfonyl)-phenyl, 2-Methoxy-5-methyl-4-(β-sulfatoethylsulfonyl)-phenyl, 2,5-Dimethoxy-4-(β-sulfatoethylsulfonyl)-phenyl, 6-(β-Sulfatoethylsulfonyl)-naphth-2-yl, 8-(β-Sulfatoethylsulfonyl)-naphth-2-yl, 6-Sulfo-8-(β-sulfatoethylsulfonyl)-naphth-2-yl, 8-Sulfo-6-(β-sulfatoethylsulfonyl)-naphth-2-yl und 1-Sulfo-6-(β-sulfatoethylsulfonyl)-2-naphth-yl.

Reste der Formel $-W-SO_2-X^1$ in den Verbindungen der allgemeinen Formel (1) sind beispielsweise 4-(β-Sulfatoethylsulfonyl)-phenyl, 3-(β-Sulftoethylsulfonyl)-phenyl, 4-Vinylsulfonyl-phenyl, 3-Vinylsulfonyl-phenyl, 2(β-Sulfatoethylsulfonyl)-ethyl, 2-(β-Chlorethylsulfonyl)-ethyl, 2-(Vinylsulfonyl)-ethyl, 3-(Vinylsulfonyl)-propyl, 3-(β-Chlorethylsulfonyl)-propyl, 3-(β-Sulfatoethylsulfonyl)-propyl, 4-(β-Sulfatoethylsulfonyl)-butyl, 4-(β-Chlorethylsulfonyl)-butyl und 4-(Vinylsulfonyl)-butyl.

Die vorliegende Erfindung betrifft weiterhin Verfahren zur Herstellung der erfindungsgemäßen Azoverbindungen der allgemeinen Formel (1), die dadurch gekennzeichnet sind, daß man eine Diazoniumsalzverbindung eines aromatischer Amins der allgemeinen Formel (3)

$$(X - SO_2)_n - A - NH_2 \qquad (3)$$

in welcher X, n und A eine der obengenannten Bedeutungen haben, mit einer Verbindung der allgemeinen Formel (4)

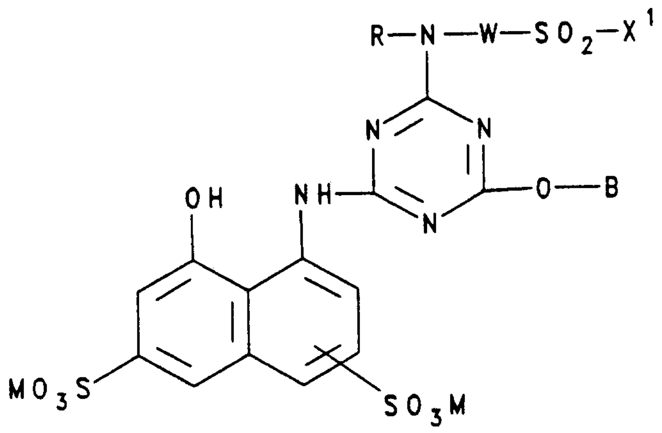

(4)

in welcher M, B, R, W und $X^1$ die obengenannten Bedeutungen haben und die Gruppe $-SO_3M$ in 3- oder 4-Stellung an den 8-Naphthol-Rest gebunden ist, kuppelt,
oder daß man eine Verbindung der allgemeinen Formel (5)

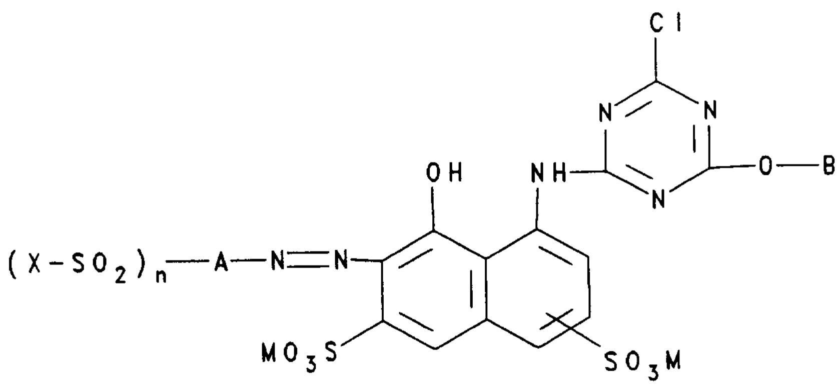

(5)

in welcher X, n, A, M und B eine der obengenannten Bedeutungen haben und die Gruppe $-SO_3M$ in 3- oder 4-Stellung an den 8-Naphthol-Rest gebunden ist, mit einer Aminoverbindung der allgemeinen Formel (6)

R
|
$H - N - W - SO_2 - X^1$ (6)

in welcher R, W und $X^1$ eine der obengenannten Bedeutungen haben, umsetzt.

Die Verbindungen der allgemeinen Formel (3) sind in der Literatur zahlreich beschrieben, desgleichen auch deren Überführung in Diazoniumverbindungen nach den üblichen Diazotierungsreaktionen, so bspw. bei -5°C bis + 15°C mittels salpetriger Säure bei einem pH-Wert von unterhalb 2,5. Die Kupplungsreaktion erfolgt bevorzugt in wäßriger Lösung analog bekannten Verfahrensweisen, so beispielsweise bei einem pH-Wert zwischen 3 und 8, vorzugsweise zwischen 4 und 7, und bei einer Temperatur zwischen 0 und 40°C, vorzugsweise zwischen 10 und 25°C.

Ebenso wird die Umsetzung der Chlortriazinylaminoverbindung der allgemeinen Formel (5) mit der Aminoverbindung der allgemeinen Formel (6) nach altbekannten Verfahren der Umsetzung eines Chlortriazins mit einer Aminoverbindung durchgeführt, so beispielsweise in wäßrigem oder wäßrig-organischem Medium, bevorzugt in wäßriger Lösung, bei einem pH-Wert zwischen 1 und 8, bevorzugt zwischen 2 und 7, insbesondere bevorzugt zwischen 3 und 4,5 und bei einer Temperatur zwischen 0 und 90 °C, bevorzugt zwischen 20 und 70 °C. Sofern die Umsetzung in einem wäßrig-organischen Medium durchgeführt wird, wobei das organische Medium ein gegenüber den Reaktanten inertes und bevorzugt mit Wasser mischbares Lösemittel ist, ist das organische Lösemittel bspw. Toluol oder bevorzugt Aceton oder N-Methyl-pyrrolidon.

Die 2,4-Dichlor-4-alkoxy-s-triazin-Verbindung, die zur Herstellung der Ausgangsverbindungen (4) und (5) dienen kann, und deren Herstellung sind bspw. aus der russischen Patentschrift Nr. 295 786 bekannt.

Ausgangsverbindungen der allgemeinen Formel (3) sind beispielsweise 4-(β-Sulfatoethylsulfonyl)-anilin, 4-Vinylsulfonyl-anilin, 3-(β-Sulfatoethylsulfonyl)-anilin, 2,4-Bis-(β-sulfatoethylsulfonyl)-anilin, 2,5-Bis-(β-sulfatoethylsulfonyl)-anilin, 3,4-Bis-(β-sulfatoethylsulfonyl)-anilin, 3,5-Bis-(β-sulfatoethylsufonyl)-anilin, 2-Methoxy-5-(β-sulfatoethylsulfonyl)-anilin, 4-Methoxy-3-(β-sulfatoethylsulfonyl)-anilin, 2-Methoxy-4-(β-sulfatoethylsulfonyl)-anilin, 2-Methoxy-5-methyl-4-(β-sulfatoethylsulfonyl)-anilin, 6-(β-Sulfatoethylsulfonyl)-2-amino-naphthalin, 8-(β-Sulfatoethylsulfonyl)-2-amino-naphthalin, 6-Sulfo-8-(β-sulfatoethylsulfonyl)-2-amino-naphthalin, 8-Sulfo-6-(β-sulfatoethylsulfonyl)-2-amino-naphthalin und 1-Sulfo-6-(β-sulfatoethylsulfonyl)-2-amino-naphthalin.

Aminoverbindungen der allgemeinen Formel $HN(R)-W-SO_2-X^1$ sind beispielsweise 4-(β-Sulfatoethylsulfonyl)-anilin, 3-(β-Sulfatoethylsulfonyl)-anilin, N-Methyl-4-(β-sulfatoethylsulfonyl)-anilin, N-Methyl-3-(β-sulfatoethylsulfonyl)-anilin, N-Methyl-3-vinylsulfonyl-anilin, N-Methyl-4-vinylsulfonyl-anilin, 4-Vinylsulfonyl-anilin, 3-Vinylsulfonyl-anilin, 2-(β-Sulfatoethylsulfonyl)-1-amino-ethan, 2-(β-Chlorethylsulfonyl)-1-amino-ethan, 2-Vinylsulfonyl-1-amino-ethan, 3-Vinylsulfonyl-1-amino-propan, 3-(β-Chlorethylsulfonyl)-1-amino-propan, 3-(β-Sulfatoethylsulfonyl)-1-amino-propan, 4-(β-Sulfatoethylsulfonyl)-1-amino-butan, 4-(β-Chlorethylsulfonyl)-1-amino-butan und 4-Vinylsulfonyl-1-amino-butan.

Die Abscheidung der erfindungsgemäß hergestellten Verbindungen aus den Syntheseansätzen erfolgt nach allgemein bekannten Methoden, so beispielsweise durch Ausfällen aus dem Reaktionsmedium mittels eines Elektrolyten, wie beispielsweise Natriumchlorid und Kaliumchlorid, oder durch Eindampfen oder Sprühtrocknung der Reaktionslösung, wobei der Reaktionslösung eine Puffersubstanz zugefügt werden kann. Die neuen erfindungsgemäßen Azoverbindungen der allgemeinen Formel (1) - im nachfolgenden Verbindungen (1) genannt - haben faserreaktive Eigenschaften und besitzen sehr gute Farbstoffeigenschaften. Sie können deshalb zum Färben von hydroxy- und/oder carbonamidgruppenhaltigem Material, insbesondere Fasermaterial, wie auch von Leder, verwendet werden. Ebenso können die bei der Synthese der Verbindungen (1) anfallenden Lösungen, gegebenenfalls nach Zusatz einer üblichen Puffersubstanz, die einen pH-Wert zwischen 3 und 7 einzuhalten vermag, und gegebenenfalls nach Konzentrierung der Lösung, direkt als Flussigpräparation der färberischen Verwendung zugeführt werden.

Gegenstand der vorliegenden Erfindung ist deshalb auch die Verwendung der erfindungsgemäßen Verbindungen (1) zum Färben (einschließlich Bedrucken) von hydroxy- und/oder carbonamidgruppenhaltigen Materialien, insbesondere Fasermaterialien, bzw. Verfahren zu deren Anwendung auf diesen Substraten. Hierbei kann man analog bekannten Verfahrensweisen vorgehen.

Hydroxygrupppenhaltige Materialien sind solche natürlichen oder synthetischen Ursprungs, wie beispielsweise Cellulosefasern oder deren Regeneratprodukte und Polyvinylalkohole oder cellulosehaltige Produkte, wie Papier.

Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane sowohl in Form der Masse, wie beispielsweise Folien, als auch in Form von Fasern, beispielsweise Wolle und andere Tierhaare, Seide, Leder, Polyamid-6,6, Polyamid-6, Polyamid-11 und Polyamid-4.

Die Verbindungen (1) lassen sich, gemäß der erfindungsgemäßen Anwendung, auf den genannten Substraten nach den für wasserlösliche Farbstoffe, insbesondere faserreaktive Farbstoffe, bekannten Anwendungstechniken applizieren und fixieren, so beispielsweise, indem man die Verbindung (1) in gelöster Form auf das Substrat aufbringt oder sie darin einbringt und sie auf diesem oder in diesem, gegebenenfalls durch Hitzeeinwirkung oder durch Einwirkung eines alkalisch wirkenden Mittels oder durch beide Maßnahmen, fixiert. Solche Färbe- und Fixierweisen sind sowohl in der Fachliteratur als auch in der Patentliteratur zahlreichbeschrieben, wie beispielsweise in der Europäischen Patentanmeldungs-Veröffentlichung Nr. 0 218 131.

Die erfindungsgemäßen Verbindungen (1) besitzen eine gute bis sehr gute Löslichkeit in Wasser und eine gute Stabilität in den Druckpasten und Färbebädern. Sie zeichnen sich durch hohe Farbstärke und guten Farbaufbau aus und liefern mit sehr hohen Fixierausbeuten farbstarke, rote Färbungen und Drucke, die sich durch gute Gebrauchs- und Fabrikationsechtheiten, wie beispielsweise Wasch-, Meerwasser-, Wasser-, Chlorbadewasser-, Säure-, Alkali-, Überfärbe-, Schweiß-, Abgas-, Bügel-, Plissier-, Dekatier-, Trockenreinigungs- und Reibechtheiten, auszeichnen. Die Lichtechtheiten der erhaltenen Färbungen und Drucke sowohl in trockenem als auch in mit Trinkwasser oder in mit einer sauren oder alkalischen Schweißlösung feuchten Zustand sind sehr gut. Nicht fixierte Farbstoffanteile lassen sich gut auswaschen. Im Druck auf Cellulosefasermaterialien erhält man scharfe Konturen mit einem klaren Weißfond. Drucke und Färbungen flecken in nicht fixiertem Zustand beim Ablegen nicht ab bzw. bluten nicht aus.

Insbesondere eignen sich die erfindungsgemäßen Verbindungen (1) jedoch für den Ätz- und Reservedruck. Ihre Verwendbarkeit in diesen beiden technisch bedeutenden Anwendungsverfahren beruht darauf, daß Färbungen dieser neuen Verbindungen (1) rein weiß ätzbar sind bzw. daß die neuen Verbindungen (1) Cellulosefasermaterial an den Stellen, an denen es mit einem Reservierungsmittel bedruckt oder imprägniert wurde, auch unter den üblichen Fixierbedingungen für faserreaktive Farbstoffe, d. h. in Gegenwart von alkalisch wirkenden Mitteln und höheren Temperaturen nicht anfärben, so daß die erfindungsgemäßen Verbindungen (1) sich problemlos für die Herstellung von Färbungen eignen, deren Negativmuster durch ein Reservierungsmittel vorgegeben ist.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Alkalimetallsalze, wie Lithium-, Natrium- oder Kaliumsalze, hergestellt und isoliert und in Form ihrer Salze zum Färben verwendet.

Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen angegebenen Absorptionsmaxima ($\lambda_{max}$) im sichtbaren Bereich wurden anhand derer Alkalimetallsalze in wäßriger Lösung ermittelt. In den Tabellenbeispielen sind die $\lambda_{max}$-Werte bei der Farbtonangabe in Klammern gesetzt; die Wellenlängenangabe bezieht sich auf nm.

Beispiel 1

Eine Lösung mit einem pH-Wert von 5 bis 6 von 41,1 Teilen 6-($\beta$-Sulfatoethylsulfonyl)-2-aminonaphthalin-1-sulfonsäure und 7 Teilen Natriumnitrit in 400 Teilen Wasser gibt man langsam in ein Gemisch aus 150 Teilen Eis und 30 Vol.-Teilen konz. wäßriger Salzsäure, rührt noch eine Stunde bei 0 bis 5 ° C nach und zerstört in üblicher Weise überschüssige salpetrige Säure mittels Amidosulfonsäure. Sodann gibt man eine neutrale Lösung von 47 Teilen 1-(2'-Chlor-4'-methoxy-s-triazinyl)-amino-8-naphthol-3,6-disulfonsäure in 550 Teilen Wasser hinzu, stellt den pH-Wert des Kupplungsansatzes mittels Natriumbicarbonat auf 4 bis 5 ein und führt die Kupplungsreaktion innerhalb dieses pH-Bereiches und bei einer Temperatur zwischen 15 und 20 ° C zu Ende.

Zu der so erhaltenen Lösung der Ausgangsverbindung der, in der Form der freien Säure geschrieben, Formel (10) (Formel s. Formelblätter nach dem letzten Beispiel) gibt man 1000 Teile Wasser und 28,1 Teile 3-($\beta$-Sulfatoethylsulfonyl)-anilin und stellt mit kristallisiertem Natriumacetat einen pH-Wert von 4 ein. Man erwärmt den Reaktionsansatz innerhalb einer Stunde langsam auf 70 ° C und rührt bei dieser Temperatur noch drei Stunden nach. Zur vollständigen Umsetzung kann der Ansatz danach erforderlichenfalls noch kurz auf 100 ° C erwärmt werden. Danach wird das Reaktionsgemisch geklärt und das Filtrat sprühgetrocknet.

Man erhält die erfindungsgemäße Azoverbindung der, in Form der freien Säure geschrieben, Formel (11) (Formel s. Formelblätter nach dem letzten Beispiel) als Alkalimetallsalz in Form eines dunkelroten, elektrolythaltigen Pulvers. In wäßriger Lösung zeigt sie ein Absorptionsmaximum bei 543 nm. Die erfindungsgemäße Azoverbindung zeigt sehr gute faserreaktive Farbstoffeigenschaften und liefert nach den in der Technik für faserreaktive Farbstoffe üblichen Applikations- und Fixierverfahren auf den in der Beschreibung genannten Materialien, insbesondere Cellulosefasermaterialien, farbstarke, blaustichig rote Färbungen und Drucke mit guten Fabrikations- und Gebrauchsechtheiten. Der Farbstoff zeichnet sich durch einen hohen Fixiergrad aus und ist hervorragend für den Ätzdruck geeignet; Färbungen dieses Farbstoffes lassen sich rein weiß ätzen. Des weiteren ist der Farbstoff sehr gut für den Reservedruck geeignet, da er auf den mit einem Reservemittel vorbehandelten Stellen einer Färbung nicht fixiert und somit, wie gewünscht, das Material an solchen Stellen nicht anfärbt, wodurch sich Färbungen mit rein weißen Mustern ergeben.

Beispiel 2

Eine neutrale Lösung von 31,9 Teilen 1-Amino-8-naphthol-3,6-disulfonsäure in 250 Teilen Wasser werden mit einer Suspension von 46,7 Teilen 2-Chlor-4-methoxy-6-(3'-β-sulfatoethylsulfonyl-phenyl)-amino-s-triazin in 100 Teilen Wasser versetzt. Man führt die Kondensationsreaktion bei einem pH-Wert von 4 und einer Temperatur von 80° C durch.
Danach gibt man eine auf üblichem Wege hergestellte wäßrige, schwefelsaure Suspension (etwa 400 Teile) des Diazoniumsalzes von 28,1 Teilen 4-(β-Sulfatoethylsulfonyl)-anilin hinzu und führt die Kupplungsreaktion bei einem pH-Wert zwischen 4 und 5 und einer Temperatur von 15 bis 20° C durch.

Die erhaltene Lösung der erfindungsgemäßen Azoverbindung der, in Form der freien Säure geschrieben, Formel (12) (Formel s. Formelblätter nach dem letzten Beispiel) wird geklärt und sprühgetrocknet. Man erhält die erfindungsgemäße Azoverbindung als Alkalimetallsalz (Natriumsalz) in Form eines elektrolythaltigen schwarzroten Pulvers. Sie besitzt im sichtbaren Bereich ein Absorptionsmaximum bei 522 nm, zeigt sehr gute faserreaktive Farbstoffeigenschaften und liefert auf den in der Beschreibung genannten Materialien, wie insbesondere Cellulosefasermaterialien, farbstarke, rote Färbungen und Drucke mit guten Echtheitseigenschaften. Der erfindungsgemäße Farbstoff ist sehr gut in den Ätz- und Reservedruckverfahren einsetzbar.

Beispiel 3

Eine wäßrige Lösung von 81,5 Teilen des Natriumsalzes einer Azo-Ausgangsverbindung, die in üblicher Weise durch Kupplungsreaktion von diazotiertem 2,5-Dimethoxy-4-(β-sulfatoethylsulfonyl)-anilin mit 1-(2'-Chor-4'-methoxy-s-triazin-6'-yl)-amino-3,6-disulfo-naphthol erhalten wird, versetzt man mit 27,2 Teilen 3-(β-Sulfatoethylsulfonyl)-1-amino-propan, rührt den Ansatz bei 10 bis 20° C zunächst bei einem pH-Wert von 7 und erhöht nach einiger Zeit den pH-Wert langsam auf 9. Man rührt noch etwa eine Stunde nach, stellt sodann den Ansatz auf einen pH-Wert von 4 mittels Salzsäure, klärt den Ansatz mit Aktivkohle bei 80° C, filtriert ihn und isoliert die erhaltene erfindungsgemäße Azoverbindung der, in Form der freien Säure geschrieben, Formel (13) (Formel s. Formelblätter nach dem letzten Beispiel) durch Aussalzen mit Natriumchlorid.

Sie besitzt im sichtbaren Bereich ein Absorptionsmaximum bei 540 nm, zeigt sehr gute faserreaktive Farbstoffeigenschaften und liefert beispielsweise auf Cellulosefasermaterialien farbstarke, rote Färbungen mit guten Echtheitseigenschaften. Der Farbstoff ist nicht nur problemlos in den üblichen Färbe- und Druckverfahren einsetzbar, sondern eignet sich auch sehr gut im Ätz- und Reservedruck.

Beispiele 4 bis 36

In den nachfolgenden Tabellenbeispielen sind weitere erfindungsgemäße Verbindungen entsprechend der allgemeinen Formel (1) mit Hilfe ihrer Formelkomponenten beschrieben. Sie lassen sich in erfindungsgemäßer Weise, beispielsweise nach einem der obigen Ausführungsbeispiele, mittels ihrer aus dem jeweiligen Tabellenbeispiel in Verbindung mit der Formel (1) ersichtlichen Komponenten (so der Diazokomponente der allgemeinen Formel (3) dem 2,4-Dichlor-6-alkoxy-s-triazin, der 1-Amino-8-naphthol-3,6- oder -4,6-disulfonsäure und dem Amin der allgemeinen Formel (6)) herstellen. Sie besitzen faserreaktive Farbstoffeigenschaften und liefern insbesondere auf Cellulosefasermaterialien nach den für faserreaktive Farbstoffe üblichen Applikations- und Fixiermethoden farbstarke, echte Färbungen und Drucke in dem in dem jeweiligen Tabellenbeispiel für Färbungen auf Baumwolle angegebenen Farbton. Sie eignen sich darüber hinaus insbesondere für den Ätz- und Reservedruck.

| Bsp. | Rest $(X-SO_2)_n$-A- | ...-Stellung der Gruppe $-SO_3M$ | Rest -O-B | Rest -N(R)-W-$SO_2$-X' | Farbton |
|---|---|---|---|---|---|
| 4 | 4-(β-Sulfatoethyl-sulfonyl)-phenyl | 3- | Ethoxy | 4-(β-Sulfatoethyl-sulfonyl)-phenylamino | rot (510) |
| 5 | dito | 4- | Methoxy | dito | rot |
| 6 | dito | 3- | Methoxy | 2-(β-Sulfatoethyl-sulfonyl)-ethylamino | rot (504) |
| 7 | dito | 3- | Methoxy | 2-(Vinylsulfonyl)-ethylamino | rot (504) |
| 8 | 3-(ß-Sulfatoethylsulfonyl)-phenyl | 3- | Methoxy | dito | rot |
| 9 | dito | 3- | Methoxy | 4-(ß-Sulfatoethylsulfonyl)-phenylamino | rot (505) |
| 10 | dito | 3- | Methoxy | 3-(β-Sulfatoethyl-sulfonyl)-phenylamino | rot (506) |

| Bsp. | Rest $(X\text{-}SO_2)_n$-A- | ...-Stellung der Gruppe $-SO_3M$ | Rest -O-B | Rest $-N(R)-W-SO_2-X^1$ | Farbton |
|---|---|---|---|---|---|
| 11 | 3-(ß-Sulfatoethylsulfonyl)-phenyl | 3- | Methoxy | 2-(Vinylsulfonyl)-ethylamino | rot (500) |
| 12 | dito | 3- | Methoxy | 3-(Vinylsulfonyl)-propylamino | rot (502) |
| 13 | dito | 4- | Methoxy | 3-(ß-Sulfatoethylsulfonyl)-propylamino | blaustichig rot |
| 14 | 2-Methoxy-5-(ß-sulfatoethylsulfonyl)-phenylamino | 3- | Ethoxy | 4-(ß-Sulfatoethylsulfonyl)-phenylamino | blaustichig rot (515) |
| 15 | dito | 3- | Methoxy | dito | dito |
| 16 | 2,5-Dimethoxy-4-(ß-sulfatoethylsulfonyl)-phenyl | 3- | Methoxy | dito | rotstichig violett (538) |
| 17 | 4-Methoxy-(3-ß-sulfatoethylsulfonyl)-phenyl | 3- | Methoxy | 4-(ß-Sulfatoethylsulfonyl)-phenylamino | blaustichig rot |

| Bsp. | Rest $(X-SO_2)_n$-A- | ...-Stellung der Gruppe $-SO_3M$ | Rest -O-B | Rest $-N(R)-W-SO_2-X^1$ | Farbton |
|---|---|---|---|---|---|
| 18 | 2-Methoxy-5-methyl-4-(ß-sulfatoethylsulfonyl)-phenyl | 3- | Methoxy | 4-(ß-Sulfatoethylsulfonyl)-phenylamino | blaustichig rot |
| 19 | dito | 4- | Methoxy | dito | rot |
| 20 | dito | 3- | Methoxy | 3-(ß-Sulfatoethylsulfonyl)-propylamino | blaustichig rot |
| 21 | dito | 3- | Ethoxy | dito | dito |
| 22 | dito | 3- | Isopropoxy | 3-(Vinylsulfonyl)-propylamino | dito |
| 23 | 1-Sulfo-6-(ß-sulfatoethylsulfonyl)-naphth-2-yl | 3- | Methoxy | dito | blaustichig rot (530) |
| 24 | dito | 3- | Methoxy | 4-(Vinylsulfonyl)-phenylamino | blaustichig rot (532) |

| Bsp. | Rest $(X-SO_2)_n-A-$ | ...-Stellung der Gruppe $-SO_3M$ | Rest -O-B | Rest $-N(R)-W-SO_2-X^1$ | Farbton |
|---|---|---|---|---|---|
| 25 | 6-Sulfo-8-(ß-sulfatoethylsulfonyl)-naphth-2-yl | 3- | Methoxy | 3-(ß-Sulfatoethylsulfonyl)-phenylamino | blaustichig rot (535) |
| 26 | dito | 4- | Methoxy | dito | rot |
| 27 | 8-Sulfo-6-(ß-sulfatoethylsulfonyl)-naphth-2-yl | 3- | Methoxy | dito | blaustichig rot (532) |
| 28 | 6-(ß-Sulfatoethylsulfonyl)-naphth-2-yl | 3- | Methoxy | dito | blaustichig rot |
| 29 | 5-(ß-Sulfatoethylsulfonyl)-naphth-2-yl | 2- | Methoxy | dito | dito |
| 30 | 8-(ß-Sulfatoethylsulfonyl)-naphth-2-yl | 3- | Methoxy | dito | rot (532) |
| 31 | 3,4-Bis-(ß-sulfatoethylsulfonyl)-phenyl | 3- | Methoxy | 3-(β-Sulfatoethylsulfonyl)-phenylamino | blaustichig rot |

| Bsp. | Rest $(X-SO_2)_n$-A- | ...-Stellung der Gruppe $-SO_3M$ | Rest -O-B | Rest $-N(R)-W-SO_2-X^1$ | Farbton |
|---|---|---|---|---|---|
| 32 | 3,5-Bis-(ß-sulfatoethylsulfonyl)-phenyl | 3- | Methoxy | dito | rot |
| 33 | dito | 4- | Methoxy | 4-(ß-Sulfatoethylsulfonyl)-phenylamino | blaustichig rot |
| 34 | dito | 3- | Methoxy | dito | rot |
| 35 | 2-Sulfo-4-(ß-sulfatoethylsulfonyl)-phenyl | 3- | n-Propoxy | dito | rot |
| 36 | 4-(ß-Sulfatoethylsulfonyl)-phenyl | 3- | Methoxy | N-Methyl-4-(ß-sulfatoethylsulfonyl)-phenylamino | rot (512) |

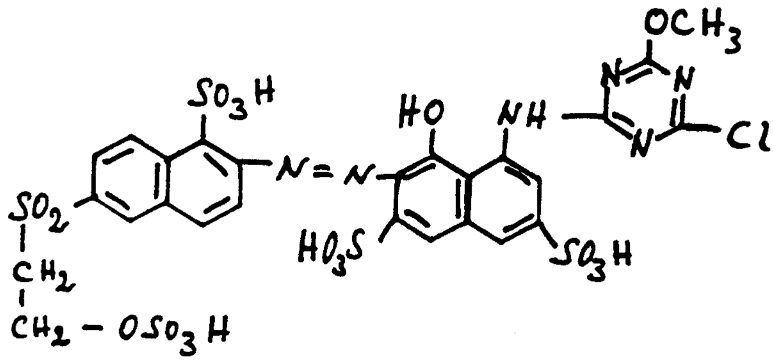

(10)

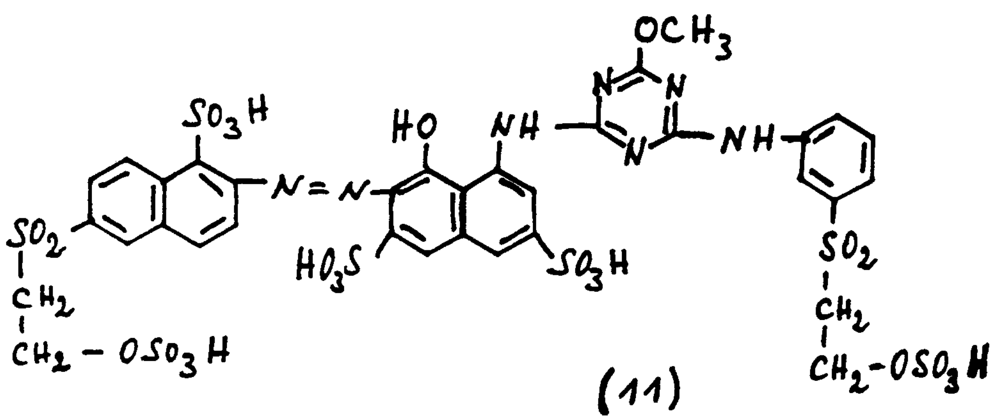

(11)

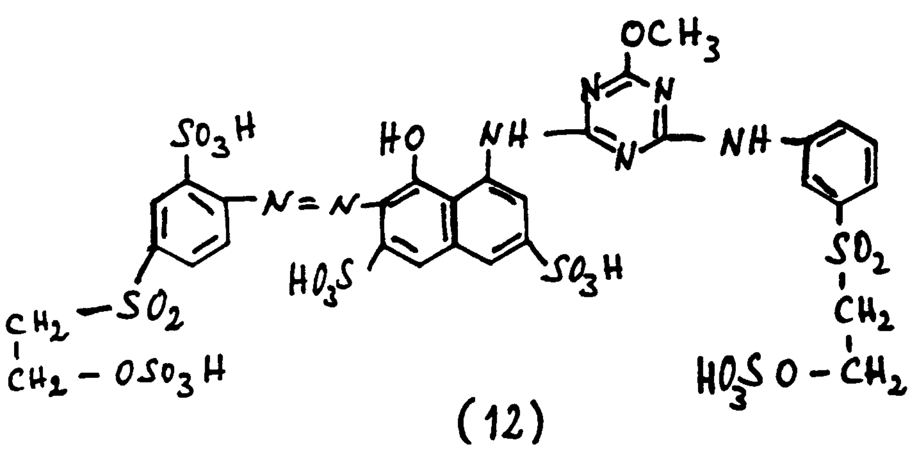

(12)

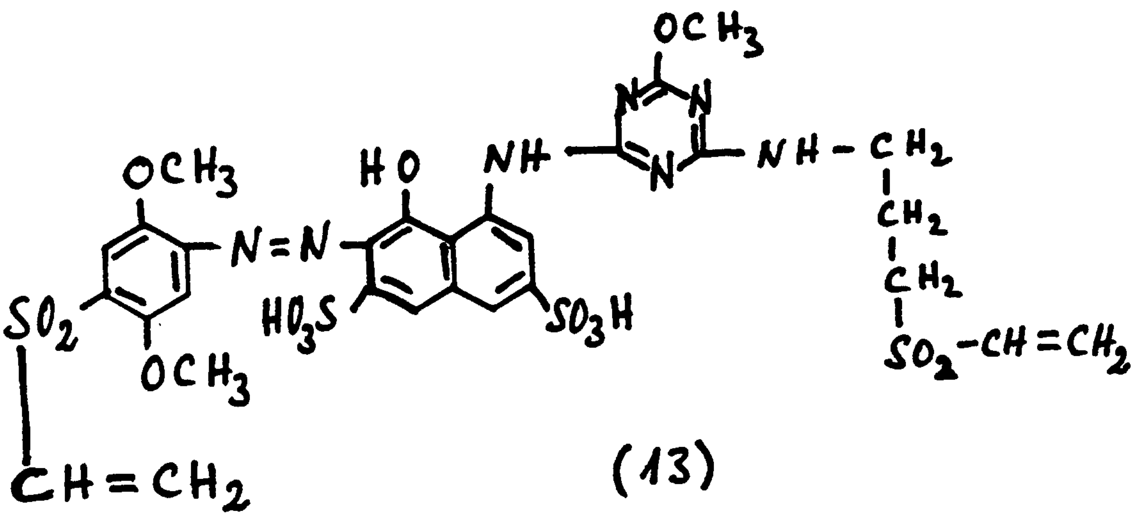

(13)

**Patentansprüche**

1. Monoazoverbindung entsprechend der allgemeinen Formel (1)

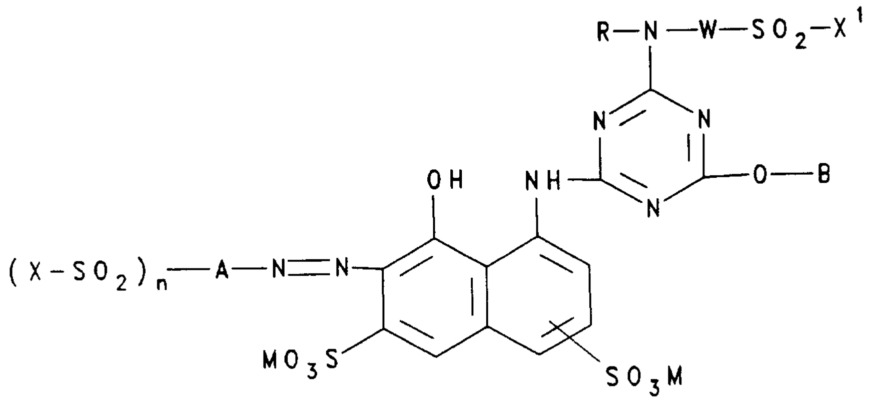

(1)

in welcher bedeuten:

- A ist Phenylen, das durch 1 oder 2 Substituenten substituiert sein kann, oder ist Naphthylen, das durch ein Sulfo substituiert sein kann;
- X ist Vinyl oder ist Ethyl, das durch einen Substituenten substituiert ist, der durch Alkali unter Bildung der Vinylgruppe eliminierbar ist;
- n ist die Zahl 1 oder 2, bevorzugt 1;
- M ist Wasserstoff oder ein Alkalimetall;
- R ist Wasserstoff oder Alkyl von 1 bis 4 C-Atomen, bevorzugt Wasserstoff;
- W ist Phenylen oder Alkylen von 2 bis 4 C-Atomen;
- $X^1$ ist Vinyl oder ist Ethyl, das durch einen Substituenten substituiert ist, der durch Alkali unter Bildung der Vinylgruppe eliminierbar ist;
- B ist Alkyl von 1 bis 4 C-Atomen;

die eine Gruppe $-SO_3M$ ist in 3- oder 4-Stellung an den 8-Naphthol-Rest gebunden.

2. Verbindung nach Anspruch 1, dadurch gekennzeichnet, daß A ein Rest der allgemeinen Formel (2a) oder (2b)

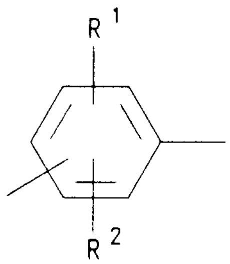

(2a)

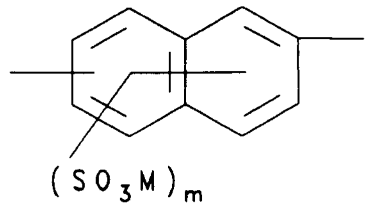

(2b)

ist, in welchen

- $R^1$ Wasserstoff, Alkyl von 1 bis 4 C-Atomen, Alkoxy von 1 bis 4 C-Atomen, Carboxy, Chlor oder Sulfo ist,
- $R^2$ Wasserstoff, Alkyl von 1 bis 4 C-Atomen, Alkoxy von 1 bis 4 C-Atomen oder Chlor ist und
- m für die Zahl Null oder 1 steht (wobei im Falle von m gleich Null diese Gruppierung ein Wasserstoffatom bedeutet).

**3.** Verbindung nach Anspruch 2, dadurch gekennzeichnet, daß A ein meta- oder para-Phenylenrest der Formel (2a) ist, in welcher $R^1$ Wasserstoff oder Methoxy und $R^2$ Wasserstoff oder Methoxy bedeuten.

**4.** Verbindung nach mindestens einem der Ansprüche 1 bis 3, dadurch gekennzeichnet, daß X $\beta$-Sulfatoethyl ist.

**5.** Verbindung nach mindestens einem der Ansprüche 1 bis 4, dadurch gekennzeichnet, daß $X^1$ Vinyl, $\beta$-Chlorethyl oder $\beta$-Sulfatoethyl ist.

**6.** Verbindung nach mindestens einem der Ansprüche 1 bis 5, dadurch gekennzeichnet, daß B Methyl ist.

**7.** Verbindung nach mindestens einem der Ansprüche 1 bis 6, dadurch gekennzeichnet, daß W 1,3-Phenylen, 1,4-Phenylen, 1,2-Ethylen oder 1,3-Propylen ist.

**8.** Verfahren zur Herstellung einer Azoverbindung der allgemeinen Formel (1) von Anspruch 1, dadurch gekennzeichnet, daß man eine Diazoniumsalzverbindung eines aromatischen Amins der allgemeinen Formel (3)

$(X - SO_2)_n - A - NH_2$ (3)

in welcher X, n und A eine der in Anspruch 1 genannten Bedeutungen haben, mit einer Verbindung der allgemeinen Formel (4)

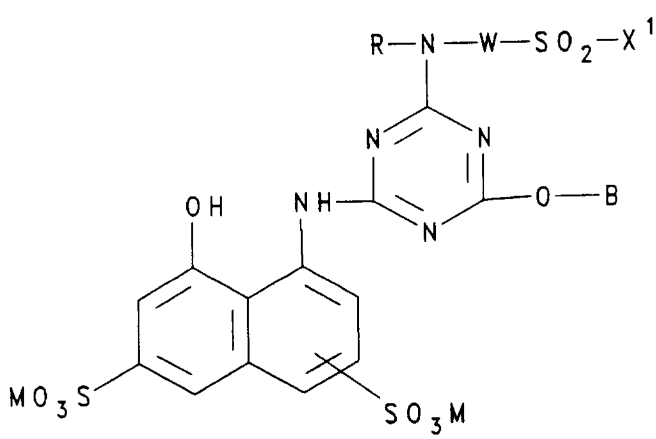

(4)

in welcher M, B, R, W und $X^1$ die der in Anspruch 1 genannten Bedeutungen haben und die Gruppe

$-SO_3M$ in 3- oder 4-Stellung an den 8-Naphthol-Rest gebunden ist, kuppelt, oder daß man eine Verbindung der allgemeinen Formel (5)

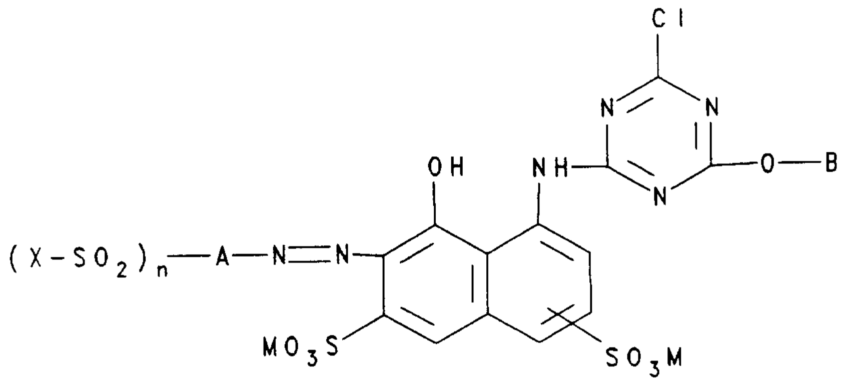

(5)

in welcher X, n, A, M und B eine der in Anspruch 1 genannten Bedeutungen haben und die Gruppe $-SO_3M$ in 3- oder 4-Stellung an den 8-Naphthol-Rest gebunden ist, mit einer Aminoverbindung der allgemeinen Formel (6)

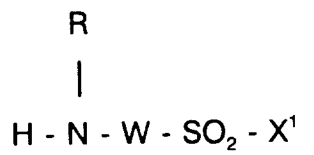

(6)

in welcher R, W und $X^1$ eine der in Anspruch 1 genannten Bedeutungen haben, umsetzt.

**9.** Verwendung einer Monoazoverbindung von Anspruch 1 zum Färben (einschließlich Bedrucken) von hydroxy- und/oder carbonamidgruppenhaltigem Material, insbesondere Fasermaterial.

**10.** Verfahren zum Färben (einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff mittels Wärme oder mit Hilfe eines alkalisch wirkenden Mittels oder durch beide Maßnahmen auf bzw. in dem Material fixiert, dadurch gekennzeichnet, daß der Farbstoff eine Monoazoverbindung von Anspruch 1 ist.

**Patentansprüche für folgenden Vertragsstaat : ES**

**1.** Verfahren zur Herstellung einer Monoazoverbindung entsprechend der allgemeinen Formel (1)

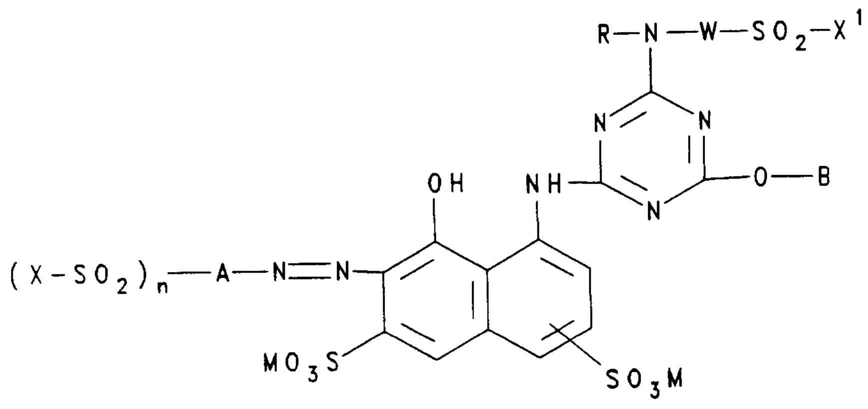

( 1 )

in welcher bedeuten:

- A ist Phenylen, das durch 1 oder 2 Substituenten substituiert sein kann, oder ist Naphthylen, das durch ein Sulfo substituiert sein kann;
- X ist Vinyl oder ist Ethyl, das durch einen Substituenten substituiert ist, der durch Alkali unter Bildung der Vinylgruppe eliminierbar ist;
- n ist die Zahl 1 oder 2, bevorzugt 1;
- M ist Wasserstoff oder ein Alkalimetall;
- R ist Wasserstoff oder Alkyl von 1 bis 4 C-Atomen, bevorzugt Wasserstoff;
- W ist Phenylen oder Alkylen von 2 bis 4 C-Atomen;
- $X^1$ ist Vinyl oder ist Ethyl, das durch einen Substituenten substituiert ist, der durch Alkali unter Bildung der Vinylgruppe eliminierbar ist;
- B ist Alkyl von 1 bis 4 C-Atomen;

die eine Gruppe $-SO_3M$ ist in 3- oder 4-Stellung an den 8-Naphthol-Rest gebunden;
dadurch gekennzeichnet, daß man eine Diazoniumsalzverbindung eines aromatischen Amins der allgemeinen Formel (3)

$(X - SO_2)_n - A - NH_2$ (3)

in welcher X, n und A eine der obengenannten Bedeutungen haben, mit einer Verbindung der allgemeinen Formel (4)

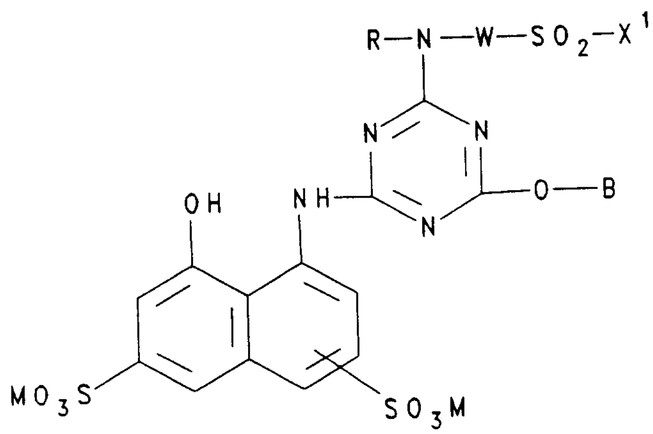

( 4 )

in welcher M, B, R, W und $X^1$ eine der obengenannten Bedeutungen haben und die Gruppe $-SO_3M$ in

3- oder 4-Stellung an den 8-Naphthol-Rest gebunden ist, kuppelt, oder daß man eine Verbindung der allgemeinen Formel (5)

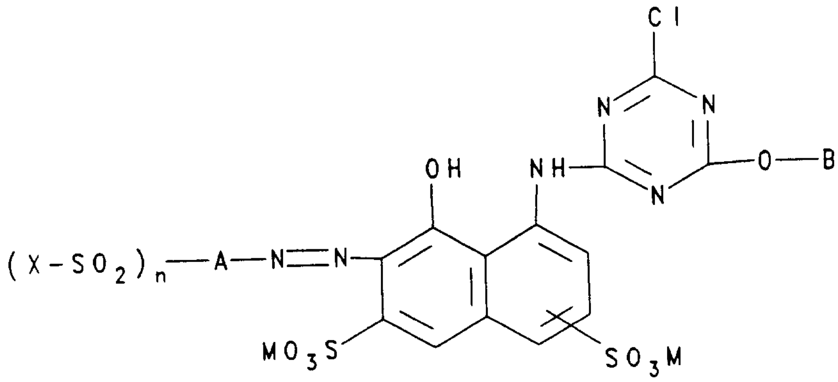

(5)

in welcher X, n, A, M und B eine der obengenannten Bedeutungen haben und die Gruppe $-SO_3M$ in 3- oder 4-Stellung an den 8-Naphthol-Rest gebunden ist, mit einer Aminoverbindung der allgemeinen Formel (6)

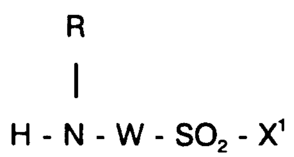

(6)

in welcher R, W und $X^1$ eine der obengenannten Bedeutungen haben, umsetzt.

**2.** Verfahren nach Anspruch 1, dadurch gekennzeichnet, daß A ein Rest der allgemeinen Formel (2a) oder (2b)

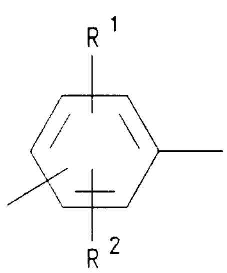

(2a)

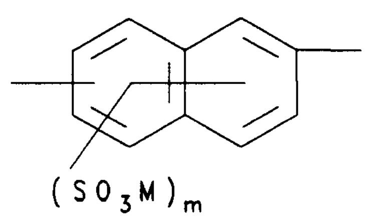

(2b)

ist, in welchen

- $R^1$ Wasserstoff, Alkyl von 1 bis 4 C-Atomen, Alkoxy von 1 bis 4 C-Atomen, Carboxy, Chlor oder Sulfo ist,
- $R^2$ Wasserstoff, Alkyl von 1 bis 4 C-Atomen, Alkoxy von 1 bis 4 C-Atomen oder Chlor ist und
- m für die Zahl Null oder 1 steht (wobei im Falle von m gleich Null diese Gruppierung ein Wasserstoffatom bedeutet).

**3.** Verfahren nach Anspruch 2, dadurch gekennzeichnet, daß A ein meta- oder para-Phenylenrest der Formel (2a) ist, in welcher $R^1$ Wasserstoff oder Methoxy und $R^2$ Wasserstoff oder Methoxy bedeuten.

**4.** Verfahren nach mindestens einem der Ansprüche 1 bis 3, dadurch gekennzeichnet, daß X $\beta$-Sulfatoethyl ist.

5. Verfahren nach mindestens einem der Ansprüche 1 bis 4, dadurch gekennzeichnet, daß $X^1$ Vinyl, $\beta$-Chlorethyl oder $\beta$-Sulfatoethyl ist.

6. Verfahren nach mindestens einem der Ansprüche 1 bis 5, dadurch gekennzeichnet, daß B Methyl ist.

7. Verfahren nach mindestens einem der Ansprüche 1 bis 6, dadurch gekennzeichnet, daß W 1,3-Phenylen, 1,4-Phenylen, 1,2-Ethylen oder 1,3-Propylen ist.

8. Verwendung einer Monoazoverbindung von Anspruch 1 zum Färben (einschließlich Bedrucken) von hydroxy- und/oder carbonamidgruppenhaltigem Material, insbesondere Fasermaterial.

9. Verfahren zum Färben (einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff mittels Wärme oder mit Hilfe eines alkalisch wirkenden Mittels oder durch beide Maßnahmen auf bzw. in dem Material fixiert, dadurch gekennzeichnet, daß der Farbstoff eine Monoazoverbindung von Anspruch 1 oder eine nach Anspruch 1 hergestellte Monoazoverbindung ist.

Europäisches Patentamt

# EUROPÄISCHER RECHERCHENBERICHT

Nummer der Anmeldung

EP 92 11 6109

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CHEMICAL ABSTRACTS, vol. 115, no. 8, 26. August 1991, Columbus, Ohio, US; abstract no. 73621f, M.MIKI ET AL 'monoazo compounds and dyeing and printing fiber materials with the same' Seite 103 ; * Zusammenfassung * & JP-A-03 072 572 (SUMITOMO CHEMICAL COMPANY, LTD.) | 1-10 | C09B62/51 |
| | ----- | | |
| | | | RECHERCHIERTE SACHGEBIETE (Int. Cl.5) |
| | | | C09B |

Der vorliegende Recherchenbericht wurde für alle Patentansprüche erstellt

| Recherchenort | Abschlußdatum der Recherche | Prüfer |
|---|---|---|
| DEN HAAG | 15 JANUAR 1993 | GINOUX C.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument